# EUROPEAN PATENT APPLICATION

(11) **EP 1 298 553 A1**
(43) Date of publication of application: **02.04.2003**
(21) Application number: 01919841.5
(22) Date of filing: 09.04.2001
(51) Int. Cl.: G06F 17/60

(54) **CUSTOMER INFORMATION COLLECTING METHOD AND SYSTEM**

(30) Priority: 07.04.2000 JP 2000105814; 20.09.2000 JP 2000284499
(71) Applicant: De-Mo. Com. Co. Ltd., Tokyo 104-0061 (JP)
(72) Inventor: MASUNAGA, Masaru, DE-MO. COM. Co. Ltd., Chuo-ku, Tokyo 104-0061 (JP); IENAGA, Shinjiro, DE-MO. COM. Co. Ltd., Chuo-ku, Tokyo 104-0061 (JP)
(74) Representative: von Hellfeld, Axel, Dr. Dipl.-Phys.
(86) International application number: JP0103050
(87) International publication number: WO01077922

(57) **Abstract**

A method for efficiently and hierarchically collecting customer information includes a step whereby a general consumer accesses an information broker via the Internet and provides notification of first customer information 30 so as to be registered as a user member, a step whereby a company is registered as a company member and provides information with regard to its sample product or sample service to the information broker, and a step whereby monitors are solicited from user members, a monitor tries a sample product or the like and sends responses to questions with regard to the sample product or the like to the information broker, and whereby second customer information 32 is accumulated at the information broker as obtained from the responses.

## Description

### FIELD OF THE INVENTION

The present invention relates to a method and a system for collection of customer information such as the names and ages or the like of general consumers and information with regard to consumer needs regarding products or the like.

### BACKGROUND ART

In the past, when a company develops a new product and predicts the sales for the product, the company would distribute samples of the product in stores or on the street and conduct surveys to study consumers' impressions and trends with regard to the product.

With this method, however, not only is the data that can be collected extremely limited with regard to time and geographical locations, but also the responses obtained relative to the survey were not necessarily appropriate.

Additionally, companies have recently distributed samples directly to users accessing the Internet, so that the users can try the products.

With this method, however, because it is necessary for the user to notify the company of such personal information as age and address, the user feels uneasy about the risk of having that information revealed to someone else. Additionally, if a user wishes to try a plurality of types of products, it is necessary for the user to access each of the corresponding companies, this being quite troublesome.

### DISCLOSURE OF THE INVENTION

The present invention has as an object to provide a method for collecting customer information, which enables a consumer to efficiently try a plurality of products or the like prior to purchasing, and which not only enables a company to quickly and properly obtain consumer trends with regard to a new product, without sending personal information to the company, but also enables efficient advertising of products.

A method of collecting customer information according to the present invention that achieves the above-noted object has a step of receiving and storing into a storage apparatus personal information, which minimally includes an e-mail address of a general user accessing via the Internet, which is a computer network, and registering the user as a user member, a step of performing a matching judgment of company information; a sample product, or a sample service of a company registered as a company member with the first customer information; a step of distributing information with regard to the sample product or sample service to a user selected based on the first customer information; and a step of receiving and storing into a storage apparatus second customer information from the user with regard to the sample product or service.

According to the above-noted method for collecting customer information, compared with a sample distribution at a store or on the street as done in the past, it is possible to collect opinions about the trial from a wide range of sample monitors, without restrictions concerning region or age and the like, and there is an improvement in the efficiency of collecting opinions with regard to the trial. In addition, in order to obtain a sample product or the like it is only necessary to access the website of an information broker and register as a member. Additionally, when registering as a monitor, it is possible to ask the user member questions about his or her awareness of the trial product or the like and about where he or she learned of the product. Even if the user replies to questions, because personal information is held only by the information broker and not even revealed to user members and company members, the user can feel at ease, since there is no leakage of information. The above-noted second customer information is hierarchically increased as each user applies for more sample products and the like and become large in amount and more accurate as customer information. Thus, it can be applied to research or direct marketing for a variety of products and the like. By using highly accurate customer information, it is possible to select information for new products and the like that are truly suited to a given user member, and send information about such products to the user by e-mail. In this manner, because a computer network is used, it is possible to achieve partial or full automation of information collection, thereby enabling collection and processing of a large amount of information in a short period of time.

In one aspect of a method for collecting customer information according to the present invention, in addition to the above-noted first customer information includes, in addition to the e-mail address, the postal code, handle, gender, address, and name of the user member. The handle is an alias used when exchanging e-mail, and collectively refers to nicknames and real names.

According to the above-noted method for collecting customer information, even when sending out sample product information, it is possible to send it out with efficiency to only users targeted in accordance with the above-noted first customer information.

In the present invention, the above-noted customer information is collected at the time of registration of a user member. The second customer information is collected with regard to individual members after the member registration.

According to the above-noted method for collecting customer information, it is possible to hierarchically and accumulatively store the second customer information, which is more detailed than the first customer information collected at the time of the user member registration. Therefore, in the case of distributing information about a sample product or the like, it is possible to narrow the selection of user members even further, enabling distribution of information to only a class of users which is truly interested in or who actually need samples.

If a user member receiving the distributed information discovers a product or service matching the user's taste, it is possible for the user to indicate that the user desires same by application via the information broker. The information broker can, via the Internet, send an advertisement for the applied-for product or service to the user that has made the application.

An advertisement on the Internet is usually a banner ad in the area surrounding a Web page, the content of which is not displayed unless the computer user clicks on the ad display. In contrast to this, because an advertisement in the present invention is displayed automatically on the computer screen after an application for a sample product or sample service, it is reliably presented to the user member. Because the user member is viewed by the information broker as being in a target segment that truly wishes receipt of the advertisement, according to the present invention it is possible to efficiently narrow the target for advertisements. Seen from the user member, because the advertisement for a product or the like which the user has applied for is one that the user is basically interested in, the user views the advertisement with a high level of interest, so that the impact on the user is greater than in the case of the above-noted banner advertisement.

In another aspect of a method for collecting customer information according to the present invention, the number of above-noted monitors is restricted to a certain limit provided for each sample product or service.

According to this method of collecting customer information, it is possible to distribute an appropriate quantity of sample products without exceeding a budget limitation planned by the company.

Yet another aspect of a method for collecting customer information according to the present invention includes a step of enabling mutual exchange of opinions between a monitor and a company member with regard to sample product or sample service that has been tried by the monitor.

According to this method for collecting customer information, although it is indirect via a network, it is possible to freely exchange opinions between a company and a user member, enabling the extraction of consumer opinions useful in future product development and, as seen from the consumer, it is possible simply and quickly to relate to the company the users needs and desires. Thus, it is possible to easily grasp the needs of the company and the needs of the consumer.

In still another aspect of a method for collecting customer information according to the present invention, by extraction from the above-noted first customer information and second customer information, although it is possible to obtain information enabling identification of an individual user member, this information is not revealed to the above-noted company. Thus, this is a method of collecting customer information including an additional step of providing the company with some information excluding information that may identify the individual.

A method for market surveying according to the present invention is a method that, based on customer information collected by another of the methods noted above, sends a questionnaire or a question via the Internet to a specific user member, receives a reply thereto via the Internet, and stores the reply in a storage apparatus.

According to this market surveying method, because it is possible to use hierarchically stored customer information, it is possible to perform a very accurate survey at a low cost and with efficiency.

Additionally, a customer information collection system according to the present invention, operating on a computer, includes means for receiving and storing into a storage apparatus personal information, which minimally includes an e-mail address of a general user performing access via the Internet, and registering the user as a user member, means for matching company information, a sample product, or a sample service of a company registered as a company member with the first customer information, means for sending information with regard to the sample product or sample service to a user selected based on the first customer information, and means for receiving and storing into a storage apparatus second customer information from the user with regard to the sample product or sample service.

According to the above-noted customer information collection system, it is possible after development of a new product to perform a market survey and efficiency and quickly market the product after it is completed as a product.

For example, in the case of developing a new product, it is possible using the above-noted system, to collect ideas about a new product from specific user members, based on the hierarchically stored customer information, enabling the performance of a concept test or a home use test. Then, when packaging or advertising the above-noted new product it is possible to efficiently send to the above-noted user member via the Internet a questionnaire with regard to the package design and concept of advertising expression. Thereafter, even after selling the product, it is possible to perform a follow-up survey of the user members with regard to the product, and a questionnaire survey with regard to the advertising effectiveness. For sales promotion of the product as well, it is possible via the Internet to send direct mail to user members, ask for monitors, and distribute invitation to sales promotion events, and also to order materials or catalogs via the Internet.

According to the present invention, compared to the previous method of distributing sample products in stores and on the street, it is possible to quickly and efficiently collect hierarchal customer information over a wide range without restrictions on regions or ages and the like. Additionally, because personal information is held only by the information broker and not even revealed to user members and company members, there is the security against information leakage. By hierarchically increasing the above-noted customer information through subsequent applications for sample products and the like, the information grows in amount and accuracy, thereby enabling effective application to research and direct marketing and the like of a variety of products.

### BRIEF DESCRIPTION OF THE DRAWINGS

Fig. 1 is a simplified drawing showing the flow in the method of collecting customer information according to the present invention.
Fig. 2 is a simplified drawing showing customer information obtained hierarchically by the method for collecting customer information according to the present invention.

### BEST MODE OF PRACTING THE INVENTION

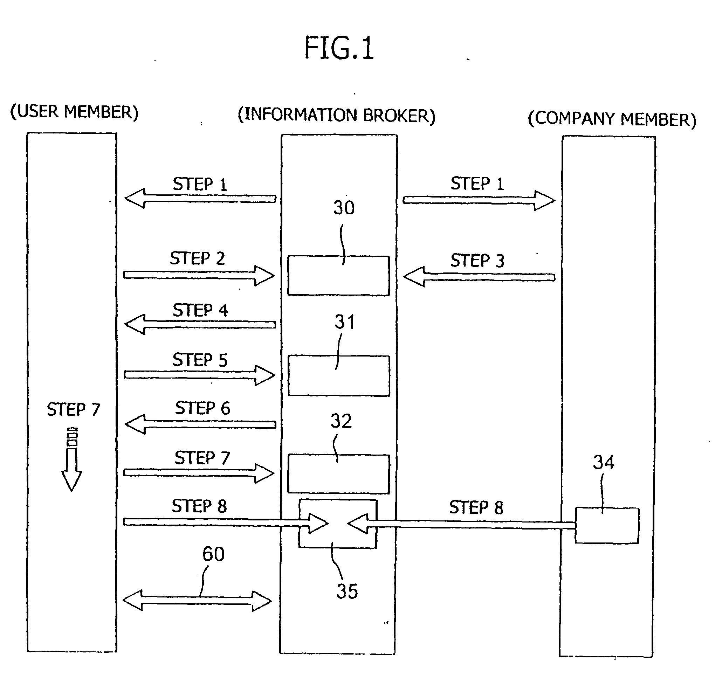

A method for collecting customer information according to the present invention is described step-by-step below, using drawings.
[Step 1] First, as shown in Fig. 1, using an Internet website, a newspaper advertisement, or a magazine advertisement or the like, the details of the operation of an information broker are widely advertised to general consumers and to various companies, and the Internet domain name (URL) and telephone number and the like of the information broker connected to the Internet are included in the above-noted advertisement.
[Step 2] A general consumer, having seen the above-noted advertisement, accesses the webpage of the above-noted information broker and registers as a user member of the information broker. At the time of registration, it is sufficient for the user to input the six pieces of information, postal code, e-mail address, handle, gender, password, and date of birth, or only some of this information. This information is initially stored at the information broker as the first customer information 30. If the user resists providing personal information such as he or her address or telephone number right away, by reducing this to the minimum of an e-mail address, such resistance is reduced.
   In another form of the present invention it is possible to obtain in addition to the above-noted postal code, e-mail address, handle, gender, password, and date of birth, the address and telephone number or the like as the first customer information. By using SSL or the like to encrypt this information the first time to collect information at one time with high security, it is possible to prevent leakage and misuse of customer information.
[Step 3] A company also registers with the information broker to become a company member. At the time of this registration, the company provides the above-noted information broker with not only data about itself, but also information about its sample product or service, if such exists. Later additions can be made to this information with regard to the company or the sample product or the like. If requested by the company, it is possible to include an advertisement for a registered company member as a banner advertisement on a webpage of the information broker. If it is possible to provide a sample product or service, there is no particular restriction with regard to the above-noted company. It is possible for a variety of different types of companies to register. For example, this can include companies that deal with cosmetics, underwear, pet food, disposable contact lenses, health food products, home-delivered refrigerated food, and golf balls or the like. In the case of service industries, it is possible for companies operating as travel agencies, athletic clubs, and music distributors to register.
[Step 4] Next, information with regard to a sample product or service provided by a company member is distributed by e-mail or the like to user members and monitors who want to try the above-noted sample product or service are solicited among the user members. In this case, the information broker analyzes the above-noted first customer information 30 and, based on the postal code, gender and the like, sends out information after narrowing target users. That is, for example in the case in which the sample product is a woman's cosmetic, by selecting only women from the user members, it is possible to efficiently monitor information. By means of the postal code it is possible to provide regional narrowing.
[Step 5] If a user member receiving this information wishes to try the product or service, it is possible to apply to be a monitor for the sample product or the like. At the time of this application, a response is made to a questionnaire with regard to personal information that is more detailed than the above-noted first customer information 30. For example, in order to identify the shipping destination of the sample product, the user member, in addition to his or her address, name, and telephone number, enters such information as hobbies in a prescribed field and sends it to the information broker, whereupon this information is stored as the second customer information 31. Date to the effect that there has been an application to be a monitor can be included in the second customer information 31 and, as in the above-noted case, the shipping destination address, name, and telephone number and the like can be included in the first customer information. Additionally, while monitors can be accepted in the sequence of receiving applications, it is possible to limit the number of monitors to a given number of people specified by the company, as a means of not exceeding the company's budget.
[Step 6] Upon receiving an application from a user member to be a monitor, the information broker sends a thank you letter to that user, sends an advertisement for the particular sample product or the like provided by the company, and sends the sample product or the like to the user member, either free or for a charge. The above-noted second customer information 31 or the contents of responses to questionnaires stored at the information broker are not revealed to anyone other than the information broker, so that it is not possible even for an employee of the company member to know them.
[Step 7] After the user member who has received the above-noted sample product or the like tries the sample product or the like, because questions with regard to the trial use of the sample product or the like are sent from the information broker, the responses thereto are returned. It is possible for each company to freely establish the questions. For example, in the case in which the sample product is a woman's cosmetic, a question can be asked about the design of the container of the cosmetic, the smooth feeling of the skin after trial use, and the appropriate price range. It is possible to ask wide-ranging questions, for example the names and manufacturers' names of a cosmetic currently being used by each monitor, the impressions of these cosmetics, and what type of cosmetic would be desired. The responses to such questions are stored at the information broker as the third customer information 32. A company member can receive, from only the second customer information 32 or from the second customer information 31 and first customer information 30 only information which cannot be used to identify the individual, so that information such as the user member's address, age, favorites, and hobbies, which could be used to identify the individual, is not passed to the company member, thereby protecting the privacy of the user members.
[Step 8] In the case of not just a one-way response from a monitor, but when there is a desire to conduct an exchange of opinions with a product planning person 34 of the company, it is possible to freely exchange opinions, via a chat room 35 or a bulletin board (BBS) provided on a webpage of the information broker, including impressions of a sample product and a consumer's desires with regard to future products.

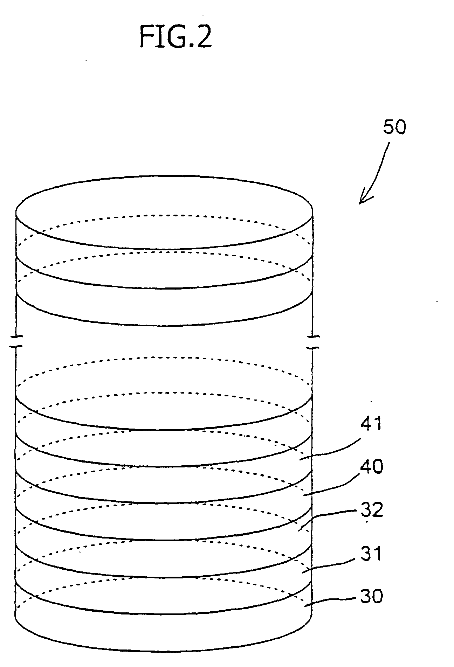

Additionally, with regard to another sample product or the like, as shown in Fig. 2, by successively accumulating at the information broker a different second customer information 40 obtained upon soliciting for other monitors using a procedure similar to that noted above, and still another second customer information 41 obtained from responses to questions after use of the sample product, it is possible to efficiently build a hierarchal customer information set 50 for user members registered with the information broker.

It will be understood that the present invention is not restricted to the above-described method for collecting customer information, and can take on a variety of variations and forms based on the technical concept of the present invention.

For example, although the foregoing is a description of a method for collecting customer information, it is possible, based on the obtained customer information, to subsequently conduct efficient marketing of a new product or service.

Specifically, if the above-noted sample product is to be marketed as a new product, as shown by the arrow 60 in Fig. 1, it is possible to place an advertisement on a webpage of the above-noted information broker and receive orders from user members from this webpage, thereby efficiently advertising and selling the new product by means of the Internet. If a benefit such as selling the new product at a special discount price to monitors of the above-noted sample product, it is possible to create a desire to purchase on the part of the monitors, and possible to advertise the new product by word of mouth to people other than user members. In addition, it is possible to make use of a method of sales in which a point system is established, and in which when a purchase is made via the above-noted webpage, points in accordance with the amount of the purchase are added, a discount commensurate with the number of points will be given upon a subsequent purchase.

### INDUSTRIAL APPLICABILITY

The present invention can be used effectively as a method for collecting customer information such as the name and age or the like of a general consumer, and information with regard to consumer needs for a product or the like. The present invention can be used to enable the consumer to efficiently try a number of products or the like before purchasing.

## Claims

1. A method for collecting customer information comprising a step of receiving and storing into a storage apparatus personal information which at least includes an e-mail address of a general user performing access via the Internet, and registering the user as a user member, a step of performing matching judgment of information, a sample product, or a sample service provided by a company with the first customer information, a step of sending information with regard to the sample product or service to a user selected based on the first customer information, and a step of receiving and storing into a storage apparatus the second customer information from the user member with reqard to the sample product or sample service.

2. The method for collecting customer information according to claim 1, wherein the customer information additionally comprises a postal code, a handle, a gender, an address, and a name of the user member.

3. The method for collecting customer information according to claim 1 or 2, further comprising a step of performing matching judgment based on the first and the second customer information.

4. The method for collecting customer information according to any one of claims 1 to 3, further comprising a step of providing a sample product or a sample service to a user, of the user members, who is desirous of same and makes an application.

5. The method for collecting customer information according to any one of claims 1 to 4, further comprising a step of distributing an advertisement with regard to the product or service for which an application has been made.

6. The method for collecting customer information according to any one of claims 1 to 5, wherein a restriction is placed on the number of user member to which the distribution is to be done, or a restriction is placed on the number of people to which the sample product or sample service is to be provided.

7. The method for collecting customer information according to any one of claims 1 to 6, further comprising a step of enabling mutual exchange of opinions between a user member and a company with regard to the sample product or sample service.

8. The method for collecting customer information according to any one of claims 1 to 7, further comprising a step of information obtained by extraction from the first and the second customer information, exclusive of information usable to identify an individual is provided to the company.

9. A method for performing a market survey that, based on customer information collected by a method according to according to any one of claims 1 to 8, sends a questionnaire or a question to a specific user member via the Internet.

10. A customer information collection system comprising means for receiving and storing into a storage apparatus personal information, which includes at least an e-mail address of a general user accessing via the Internet, and registering the user as a user member, means for performing a matching judgment of information, a sample product, or a sample service provided by a company registered as a company member with the first customer information, means for sending information with regard to the sample product or service to a user selected based on a result of the matching, and means for receiving and storing into a storage apparatus second customer information from the user with regard to the sample product or service.
